# FASCICULE DE BREVET EUROPEEN

(11) **EP 2 928 944 B1**
(45) Date de publication et mention de la délivrance du brevet: **01.02.2017**
(21) Numéro de dépôt: 13808149.2
(22) Date de dépôt: 03.12.2013
(51) Int. Cl.: C08L 95/00, C08J 3/20, C08J 3/00, C08J 3/12, C08J 3/22

(54) **COMPOSITION BITUMINEUSE SOUS FORME DE GRANULÉS ET SON PROCÉDÉ DE PRÉPARATION**
BITUMINÖSE ZUSAMMENSETZUNG IN FORM VON GRANULATEN UND IHR HERSTELLUNGSVERFAHREN
BITUMINOUS COMPOSITION IN FORM OF GRANULATES AND ITS PROCESS FOR MAKING IT

(30) Priorité: 05.12.2012 FR 1203304
(43) Date de publication de la demande: 14.10.2015
(60) Demande divisionnaire: 16198723.5
(73) Titulaire: Eiffage Travaux Publics, 93330 Neuilly Sur Marne (FR)
(72) Inventeur: KRAFFT, Serge, F-69540 Irigny (FR); LOUP, Frédéric, F-69100 Villeurbanne (FR)
(74) Mandataire: Renard, Alexis
(86) Numéro de dépôt international: PCT/FR2013/052922
(87) Numéro de publication internationale: WO 2014/087091

(56) Documents cités:
- WO-A2-2006/107179
- BE-A3- 1 002 939
- DE-A1-102010 035 071
- FR-A1- 2 871 804
- FR-A1- 2 875 808
- FR-A1- 2 918 066
- FR-A1- 2 958 302
- US-A- 4 081 502
- US-A- 4 837 252
- US-A- 5 078 905
- US-A- 5 256 712
- US-A1- 2005 101 701
- US-A1- 2008 153 945
- US-A1- 2010 273 915
- US-A1- 2011 257 308
- US-A1- 2011 269 876
- DATABASE WPI Week 201145 Thomson Scientific, London, GB; AN 2011-G20998 XP002707654, & CN 102 020 859 A (ZHEJIANG OPTIMUM HI-TECH BUILDING MATERI) 20 avril 2011 (2011-04-20)

## Description

La présente invention se rapporte à une composition bitumineuse sous forme de granulés comportant un noyau et un enrobage. L'invention se rapporte également au procédé de préparation de ladite composition.

Les compositions bitumineuses comportant une matrice liante sont aujourd'hui couramment utilisées pour fabriquer des liants anhydres. Ces compositions sont aussi utilisées en émulsion pour application routière. Pour améliorer les caractéristiques physicochimiques, les compositions bitumineuses comportant une matrice liante peuvent notamment englober des polymères dispersés dans celles-ci.

Généralement, la préparation de ces compositions est longue et est réalisée dans des usines dédiées comportant des cuves mélangeuses agencées pour recevoir les différents composants et additifs formant la composition. Les cuves peuvent comprendre des outils de brassage, de broyage, de dispersion, de cisaillement ou d'autres éléments contribuant à la maturation de la composition. Des dispositifs de type extrudeuse sont utilisés et présentent l'avantage de permettre un procédé de préparation en continu en un temps réduit. Toutefois, l'utilisation d'extrudeuses est parfois accompagnée d'inconvénients comme on le verra plus loin.

Selon la composition recherchée, les outils de préparation peuvent comprendre des systèmes permettant l'ajout de réticulant. Les conditions dans lesquelles la réticulation ou la dispersion a lieu le cas échéant peut varier selon la composition finale recherchée. Cela peut affecter les cadences de production et/ou les coûts de préparation.

Par ailleurs, l'usage de certains additifs peut avoir un impact environnemental sensible. De plus, les matières premières utilisées et leur qualité physicochimique ont un impact considérable sur les propriétés physicochimiques (y compris les performances thermomécaniques) de la composition finale. Il existe un besoin constant de contrôler et d'uniformiser les matières premières employées. Ce contrôle est un processus lourd et coûteux.

Lors du procédé de préparation des compositions, les quantités d'énergie sont très importantes et en particulier en ce qui concerne la chauffe de cuves de malaxage qui peuvent parfois contenir une quantité importante de composants. Le chauffage en tant que tel doit également être surveillé afin de ne pas dégrader les performances thermomécaniques de la composition finale.

Il est également très important pour les compositions bitumineuses de présenter de bonnes caractéristiques (notamment l'homogénéité) de stockage.

Le document FR 2 871804 propose un procédé de préparation d'un mélange contenant du bitume et au moins un polymère dans une extrudeuse à température variable.

Le document US2010/0273915 divulgue des particules de concentrés d'asphalte et de polymère (SBS) dont le taux d'asphalte est supérieur à 60 %. Aucun compatibilisant ni charge anti-adhérente sont décrits.

Il a été démontré que la granulométrie du polymère joue un rôle primordial dans la préparation de compositions bitumineuses. En effet, plus le polymère présente une granulométrie fine, plus sa vitesse de dispersion dans le bitume est élevée. Cependant, le conditionnement des polymères sous forme de poudre a un coût d'autant plus élevé que la taille des particules de ladite poudre est petite. Par ailleurs un tel conditionnement présente certains risques et nécessite la mise en place de mesures de sécurité onéreuses.

Par ailleurs, il a été tenté de mélanger le polymère sous forme liquide avec la matrice liante de la composition bitumineuse, ce qui résulte en un temps de malaxage très court et un mélange quasi instantané. Toutefois, l'énergie nécessaire pour liquéfier le polymère est très importante et le temps nécessaire est long. Aussi cette phase est réalisée à des températures pouvant induire une dégradation du polymère.

De manière générale, l'utilisation d'extrudeuses pour la préparation de compositions de matrice liante demande des conditions opératoires très précises. Il existe donc un besoin constant d'améliorer les procédés de préparation afin de pallier les inconvénients cités ci-dessus. Tout particulièrement, il existe un besoin de limiter les coûts, d'avoir une liberté de choix sur la matière première et surtout de fournir une composition. Par stabilité dans le temps on comprend notamment la possibilité de stockage sur des durées prolongées et à température ambiante.

La présente invention vient améliorer la situation.

À cet effet, l'invention propose un procédé de préparation de granulés à composition de matrice liante, comprenant les étapes suivantes :
a. fournir 40% à 60% en poids d'une matrice liante, 30% à 40% en poids d'un polymère, 4% à 6% en poids d'un agent compatibilisant, et 3% à 15% en poids d'une charge anti-adhérente ;
b. microniser le polymère en présence de l'agent compatibilisant pour former une préparation à polymère micronisé ayant des particules de polymère de diamètre compris entre 250 µm à 1000 µm, de préférence entre 400 µm à 600 µm ;
c. ajouter la matrice liante à ladite préparation à polymère micronisé obtenue à l'étape b. pour former un mélange à matrice liante;
d. ajouter la charge anti-adhérente audit mélange à matrice liante obtenu à l'étape c. pour former un noyau ;
e. formuler le noyau obtenu à l'étape d. en un produit pré-granulé ;
f. sécher le produit pré-granulé ;
g. enrober le produit pré-granulé avec un agent anti-collant;
dans lequel l'étape b. est réalisée à une température inférieure ou égale à 60°C, les étapes c. et d. sont réalisées à une température comprise entre 130°C et 200°C.

Selon un mode de réalisation l'étape e. comporte une mise sous pression comprise entre 2000 kPa et 7000 kPa.

Le polymère est de préférence le copolymère styrène-butadiène-styrène (SBS).

L'étape d. peut comprendre en outre l'ajout de 1% à 5% en poids d'un agent de réticulation. Selon un mode de réalisation de l'invention l'étape d. peut comprendre en outre l'ajout de 1% à 5% en poids d'un agent de réticulation *Rétiflex.*

L'agent compatibilisant est de préférence choisi parmi le groupe constitué d'une cire à base d'un mélange de dérivés d'acides gras, d'une cire paraffinique, d'une cire d'origine végétale, d'une cire d'origine animale, ou d'un mélange de ceux-ci.

La matrice liante peut être choisie parmi le groupe constitué de bitume de classe 35/50, de bitume de classe 50/70, de bitume de classe 70/100, de bitume de classe 160/220, de poix de tall-oil ou de ses dérivés, d'un mélange d'acides gras ou de ses dérivés, d'une huile d'origine végétale, d'une huile d'origine animale, d'un dérivé de colophane, d'un ester méthylique d'huile végétale ou d'un mélange de ceux-ci.

La charge anti-adhérente peut être choisie parmi le groupe constitué de talc, de stéarate de zinc, de stéarate de calcium, de stéarate de magnésium, de poudre de polyéthylène, de cire de polyéthylène, de silice broyée, de noir de carbone, ou d'un mélange de ceux-ci.

L'étape e. peut comprendre la découpe par cisaillement dudit noyau de manière à obtenir un produit pré-granulé formé par des particules. Dans ce mode de réalisation les particules obtenues ont une masse pour environ cent particules comprise entre 0,4 g à 0,9 g.

Le polymère fourni à l'étape a. peut être sous forme de grains de taille comprise entre 1 mm et 10 mm. Le polymère fourni à l'étape a. est de préférence sous forme de grains de taille comprise entre 1 mm et 5 mm.

L'invention vise également une composition bitumineuse sous forme de granulés, chaque granulé comportant un noyau et un enrobage et présentant une masse pour environ cent particules comprise entre 0,6 g à 1,0 g, le noyau comprenant :
- 40% à 60% en poids d'une matrice liante;
- 30% à 40% en poids d'un polymère ;
- 4% à 6% en poids d'un agent compatibilisant; et
- 3% à 15% en poids d'une charge anti-adhérente ;
et l'enrobage comprenant un agent anti-collant.

Dans cette composition, la matrice liante peut être choisie parmi le groupe constitué de bitume de classe 35/50, de bitume de classe 50/70, de bitume de classe 70/100, de bitume de classe 160/220, de poix de tall-oil ou de ses dérivés, d'un mélange d'acides gras ou de ses dérivés, d'une huile d'origine végétale, d'une huile d'origine animale, d'un dérivé de colophane, d'un ester méthylique d'huile végétale ou d'un mélange de ceux-ci. Le polymère peut être le copolymère styrène-butadiène-styrène (SBS). L'agent compatibilisant est de préférence choisi parmi le groupe constitué d'une cire à base d'un mélange de dérivés d'acides gras, d'une cire paraffinique, d'une cire d'origine végétale, d'une cire d'origine animale, ou d'un mélange de ceux-ci. Les mélanges d'acides gras sont particulièrement préférés dans la composition de l'invention. La charge anti-adhérente du noyau peut être choisie parmi le groupe constitué de talc, de stéarate de zinc, de stéarate de calcium, de stéarate de magnésium, de poudre de polyéthylène, de cire de polyéthylène, de silice broyée, de noir de carbone ou d'un mélange de ceux-ci. L'agent anti-collant de l'enrobage peut être choisi parmi le groupe constitué de talc, de stéarate de zinc, de stéarate de calcium, de stéarate de magnésium et de poudre de polyéthylène.

Le noyau de la composition de l'invention peut en outre comprendre 1% à 5% en poids d'un agent de réticulation.

L'invention vise par ailleurs une utilisation de la composition bitumineuse telle que décrite ci-dessus dans les applications routières d'une part, et pour la fabrication d'un mélange bitumineux comprenant des gravillons d'autre part.

La composition selon l'invention peut être introduite directement dans des malaxeurs des centrales d'enrobage. Lorsque la composition renferme un agent de réticulation elle est généralement destinée à être mélangée avec du bitume dans une usine de fabrication de liants modifiés aux polymères. L'invention vise une utilisation de la composition de l'invention dans une usine de liants.

Finalement, l'invention vise aussi un dispositif comprenant une extrudeuse bi-vis comportant une section d'entrée, une section intermédiaire et une section de sortie, ladite section d'entrée étant agencée pour recevoir au moins les éléments du groupe constitué d'un polymère et d'un agent compatibilisant, ladite section intermédiaire étant agencée pour recevoir au moins une matrice liante, et ladite section de sortie étant agencée pour recevoir au moins une charge anti-adhérente, et le cas échéant, un agent de réticulation ; un outil de micronisation disposé dans la section d'entrée pour microniser ledit polymère en présence de l'agent compatibilisant et former une préparation à polymère micronisé ayant des particules de polymère de diamètre inférieur ou égale à 500 µm ; un outil de mélange disposé dans chaque section pour mélanger les éléments respectivement reçus par la section d'entrée, la section intermédiaire et la section de sortie et former un noyau dans la section de sortie ; un régulateur de température coopérant avec chaque section pour maintenir une température inférieure ou égale à 60°C dans ladite section d'entrée et pour maintenir une température comprise entre 130°C et 200°C dans lesdites sections intermédiaire et terminale ; un compresseur coopérant au moins avec la section de sortie de l'extrudeuse pour une mise sous pression de cette section à une pression comprise entre 2000 kPa et 7000 kPa ; une chambre de granulation comprenant un outil de cisaillement disposé au voisinage de ladite section de sortie agencé pour découper ledit noyau de manière à obtenir un produit pré-granulé formé par des particules ayant une masse pour environ cent particules comprise entre 0,4 g et 0,9 g ; un outil de séchage pour sécher ledit produit pré-granulé ; et une chambre d'enrobage pour enrober ledit produit pré-granulé avec un agent anti-collant et ainsi former une composition granulé comportant des granules ayant une masse pour environ cent particules comprise entre 0,5 g et 1 g.

D'autres avantages et caractéristiques de l'invention apparaîtront à la lecture de la description détaillée ci-après et sur le dessin annexé sur lequel :

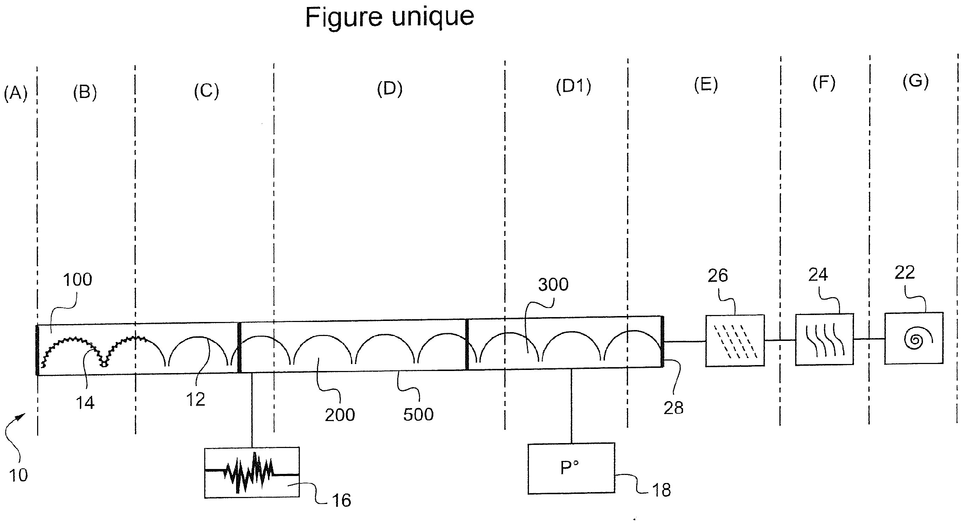

- la figure 1 représente un schéma d'un dispositif selon l'invention ainsi que les étapes du procédé de préparation de granulés à composition de matrice liante.

Le dessin et la description ci-après contiennent, pour l'essentiel, des éléments de caractère certain. Ils font partie intégrante de la description, et pourront donc non seulement servir à mieux faire comprendre la présente invention, mais aussi contribuer à sa définition, le cas échéant.

La préparation de granulés à composition de matrice liante, tels que les enrobés bitumineux modifiés aux polymères, peut être réalisée dans des dispositifs de type extrudeuse.

La présente invention vise notamment un procédé de préparation de granulés à composition de matrice liante. La composition finale comprend entre autre une matrice liante (bitume) et au moins un polymère. Le procédé est réalisé dans un dispositif de type extrudeuse.

Les dispositifs de type extrudeuse offrent un traitement permettant le cisaillement d'une masse pâteuse et son transport à travers un ou plusieurs orifices appropriés pour obtenir un produit final sous forme de granulés. Le fonctionnement d'une extrudeuse est accompagné de phases de broyage, de malaxage et de transport de la matière qui assurent une homogénéisation du mélange entre matrice liante, le polymère et le reste des composants formant le produit final, qui sont classiquement introduits séparément dans l'extrudeuse. Pour effectuer le brassage, l'extrudeuse comporte un organe de mélange qui peut-être formé par une ou plusieurs vis de type vis d'Archimède.

Il existe des extrudeuses dites extrudeuses bi-vis comportant au moins deux vis. Ces vis peuvent alors tourner dans le même sens ou en sens opposés. Les extrudeuses actuelles permettent ainsi de former un mélange en quelques dizaines de secondes. Pour optimiser les opérations de mélange (efficacité de brassage/malaxage etc.) il est possible de faire varier et d'adapter les profils de vis, la température, la vitesse de rotation, les débits des composants.

L'utilisation d'une extrudeuse présente plusieurs avantages et notamment la possibilité de faire varier la température de travail le long du fourreau dans lequel se trouve la vis à extrudeuse. En effet, selon les composants chimiques introduits dans l'extrudeuse, la possibilité de pouvoir régler et de faire varier la température dans les différentes sections de l'extrudeuse joue un rôle essentiel dans la détermination des caractéristiques physico-chimiques du produit final. Ainsi la durée de dispersion du polymère peut être réduite à quelques secondes ce qui limite son exposition à des températures élevées et évite ainsi la dégradation de ses performances.

Par exemple, il a été constaté qu'une température de travail supérieure à 160°C pouvait s'avérer préférable lorsqu'on utilise, en tant que polymère, le copolymère tri séquencé styrène-butadiène-styrène (SBS) afin d'assurer le ramollissement de celui-ci, sa bonne dispersion et son gonflement dans les huiles et résines du bitume. Cette température est alors appliquée dans les sections de l'extrudeuse à mélange/malaxage choisies. Dans d'autres sections l'abaissement de la température pourra favoriser le refroidissement jusqu'à la température ambiante de stockage du produit final.

Les extrudeuses permettent de former un mélange maître. Ce mélange peut être composé de différentes composantes chimiques lesquelles ont, le cas échéant, des propriétés physico-chimiques très différentes. La régulation de température est donc un facteur essentiel et sensible dans la préparation de produits destinés à des applications spécifiques.

Un autre avantage est qu'une extrudeuse comprend un ensemble d'éléments agencés pour travailler en synergie les uns avec les autres et que ces éléments peuvent être adaptés selon les besoin requis. Ainsi, l'extrudeuse peut présenter des vis spécifiques dotées d'outils formant par exemple des mélangeurs/malaxeurs particuliers.

L'état de la technique renseigne que plus le polymère est finement dispersé, plus la durée d'agitation est courte. L'état de la technique renseigne également qu'un polymère sous forme liquide résulte en un temps de brassage/malaxage très court.

Mais, le coût du conditionnement des polymères sous forme de poudre est d'autant plus élevé que la taille des particules de ladite poudre est petite ; tandis que l'énergie nécessaire pour liquéfier le polymère est très importante et le temps nécessaire est long.

De plus, les polymères sous forme de poudre posent des problèmes de santé pour le personnel opérationnel (inhalation de particules fines, risque d'auto-inflammation ou d'explosion etc.). La Demanderesse a analysé des polymères à l'état liquide et a pu identifier des désavantages qui les rendent généralement inutilisable. Parmi ces désavantages, on peut notamment citer une rigidité augmentée liée à une potentielle oxydation résultant de leur exposition à des températures élevées (proche de 200°C).

La Demanderesse a mis au point un procédé et un outil de micronisation optimisant les caractéristiques physico-chimiques du produit final. La mise en oeuvre du procédé et l'outil de micronisation limitent les inconvénients de l'état de la technique liés à l'utilisation d'une poudre de polymère ou d'un polymère sous forme liquide. De plus, la Demanderesse a identifié des températures de travail et un protocole de fabrication par extrusion permettant de :
- améliorer les caractéristiques physico-chimiques du produit final (notamment en termes de stabilité au stockage) ;
- microniser du polymère SBS en granulés dans une extrudeuse ;
- optimiser la dispersion et le gonflement du polymère SBS dans une matrice liante ;
- obtenir des granulés (de mélange maître) stockables à température ambiante.

Ceci a conduit à une composition de matrice liante présentant des caractéristiques physico-chimiques optimisées par rapport à celles connues dans l'état de la technique. De plus, le procédé de l'invention est plus économique en termes de coûts et d'énergie que les procédés connus.

Un avantage de l'invention est notamment la possibilité d'ajouter le polymère sous forme brute tel que sous forme de grains. Le polymère sous cette forme est répandu commercialement, est économique, est simple à stocker et ne nécessite aucun prétraitement.

En effet, un outil de micronisation est disposé en début d'extrudeuse lequel permet de microniser le polymère brut en des particules de diamètre compris entre 250 µm et 1000 µm, de préférence entre 400 µm et 600 µm. La micronisation est réalisée en présence d'un agent compatibilisant. La présence de l'agent compatibilisant abaisse l'énergie de frottement lors de la micronisation et limite ainsi l'auto-échauffement du polymère. Avantageusement, la température lors de la micronisation est réglée à une température inférieure ou égale à 60°C. Ainsi, on évite la détérioration du polymère (notamment par oxydation) et on améliore ainsi les caractéristiques physico-chimiques du produit final.

Dans d'autres modes de réalisation, le polymère peut être micronisé en amont de son introduction dans l'extrudeuse.

Une autre particularité de la présente invention est la combinaison dans le produit final d'une charge anti-adhérente et d'un agent anti-collant. La charge anti-adhérente est comprise dans le noyau du produit final, tandis que l'agent anti-collant enrobe ce noyau. La synergie entre ces deux composants augmente notamment la stabilité de stockage du produit final.

D'autre part, la Demanderesse a découvert non sans surprise que la mise sous pression d'une extrudeuse par réglage actif permettait de contrôler la masse et le diamètre des particules formant le produit final.

Un outil de découpe (ou cisaillement) disposé en section de sortie de l'extrudeuse permet en théorie de granuler une composition pâteuse en des particules de taille choisie. Toutefois, l'avancement de la composition pâteuse à travers l'outil de cisaillement n'est pas toujours régulier en raison de possibles variations de viscosité notamment ou de vides d'air au sein de la composition pâteuse. La mise sous pression permet de contrôler activement l'avancement et ainsi de contrôler et d'uniformiser la découpe de la composition pâteuse par l'outil de cisaillement.

Ainsi, selon un mode de réalisation de l'invention les étapes b. à d. du procédé de l'invention décrit ci-avant, peuvent être réalisées dans une extrudeuse sous pression comprise entre 2000 kPa et 7000 kPa, et de préférence entre 3000 kPa et 6000 kPa. Selon un mode particulier de réalisation la pression est comprise entre 5500 kPa et 5700 kPa. En conséquence, les particules du produit final ont une masse pour environ cent particules comprise entre 0,4 g et 0,9 g.

La figure 1 montre un dispositif de l'invention 10. Le dispositif 10 comporte une extrudeuse 500 de type bi-vis, une chambre de granulation 26 sous air ou sous eau, un outil de séchage 20 et une chambre d'enrobage 22.

Parallèlement au dispositif 10, la figure 1 montre les opérations du procédé de l'invention selon un mode de réalisation particulier.

L'extrudeuse 500 présente une section d'entrée 100, une section intermédiaire 200 et une section de sortie 300. Chaque section 100, 200, 300 est agencée pour recevoir les composantes formant la composition de matrices liantes selon l'invention.

Avant l'introduction dans l'extrudeuse des différents composants chimiques de la composition de matrice liante de l'invention, le procédé de l'invention prévoit une mise à disposition de ces composants. Dans le mode de réalisation décrit ici, cette mise à disposition est réalisé par une opération **A** qui consiste à fournir 40% à 60% en poids d'une matrice liante, 30% à 40% en poids d'un polymère, 4% à 6% en poids d'un agent compatibilisant, et 3% à 15% en poids d'une charge anti-adhérente(et le cas échéant, 1% à 5% en poids d'un agent de réticulation).

Le polymère est de préférence le copolymère styrène-butadiène-styrène (SBS).

L'agent compatibilisant est choisi parmi le groupe constitué d'une cire à base d'un mélange de dérivés d'acides gras, d'une cire paraffinique, d'une cire d'origine végétale, d'une cire d'origine animale, ou d'un mélange de ceux-ci.

La matrice liante peut être choisie parmi le groupe constitué de bitume de classe 35/50, de bitume de classe 50/70, de bitume de classe 70/100, de bitume de classe 160/220, de poix de tall-oil ou de ses dérivés, d'un mélange d'acides gras ou de ses dérivés, d'une huile d'origine végétale, d'une huile d'origine animale, d'un dérivé de colophane, d'un ester méthylique d'huile végétale ou d'un mélange de ceux-ci.

La charge anti-adhérente peut être choisie parmi le groupe constitué de talc, de stéarate de zinc, de stéarate de calcium, de stéarate de magnésium, de poudre polyéthylène, de cire de polyéthylène, de silice broyée, de noir de carbone, ou d'un mélange de ceux-ci.

La section d'entrée 100 peut recevoir au moins le polymère et l'agent compatibilisant. La section intermédiaire 200 peut recevoir au moins la matrice liante et la section de sortie 300 peut recevoir au moins la charge anti-adhérente et le cas échéant, un agent de réticulation.

La figure 1 montre aussi un outil de mélange 12 disposé dans chaque section de l'extrudeuse 500. Dans le présent mode de réalisation l'outil de mélange 12 comporte une double vis. Dans la section d'entrée 100 l'outil de mélange 12 est en coopération avec un outil de micronisation 14. Cet outil de micronisation permet, dans la section d'entrée 100, de microniser des grains de polymère introduits à l'état brut dans l'extrudeuse. Cette micronisation est réalisée en présence d'un agent compatibilisant et sous contrôle de température comme décrit plus loin.

Ainsi, le procédé de l'invention prévoit une opération **B** qui consiste ici à microniser le polymère en présence de l'agent compatibilisant pour former une préparation à polymère micronisé ayant des particules de polymère de diamètre inférieur ou égal à 500 µm.

L'utilisation de l'outil de micronisation 14 offre la possibilité d'introduire directement le polymère sous forme brute, à savoir sous forme de grains. Comme décrit plus haut, l'état de la technique fait intervenir au moins une étape supplémentaire pour conditionner le polymère avant l'introduction en extrudeuse. Il s'agit essentiellement de la transformation du polymère en poudre, L'invention permet de se passer de cette étape de conditionnement et ce grâce à l'outil de micronisation 14 disposé dans la section d'entrée de l'extrudeuse 500.

Pour favoriser la micronisation du polymère, l'invention propose l'introduction en parallèle de l'agent compatibilisant. La micronisation du polymère en présence de l'agent compatibilisant peut être réalisée sous température contrôlée à une température inférieure ou égale à 60°C. Ceci évite la détérioration du polymère (par exemple son oxydation) et augmente la qualité du produit final. L'agent compatibilisant contribue à la régulation de la température lors de la micronisation du polymère. Il s'agit essentiellement de l'abaissement de l'énergie de frottement qui survient lors de ladite micronisation. De plus, le fait d'opérer à une température inférieure ou égale à 60°C permet de conserver les propriétés élastomériques de du polymère SBS. Tout ceci résulte en un produit final ayant de bonnes performances physico-chimiques.

Pour davantage contrôler la température au sein du dispositif 10 de l'invention, celui-ci comprend un régulateur de température 16. Ce régulateur de température 16 est agencé pour agir sur chaque partie du dispositif 10 de l'invention. Le mode de réalisation de la figure 1 montre un lien direct entre régulateur de température 16 et l'extrudeuse 500. Toutefois, il faut comprendre que le régulateur peut agir sur chaque partie du dispositif et notamment sur la température de l'air ou de l'eau dans la chambre de granulation 26.

Le régulateur de température 16 permet un contrôle continu de la température tout au long de l'extrudeuse 500. Chaque étape du procédé de préparation de l'invention est ainsi optimisée à température sensiblement choisie. Ainsi, la température régnant dans la section d'entrée 100 peut être différente de la température régnant dans la section intermédiaire 200, elle-même différente de la température régnant dans la section de sortie 300. Le régulateur de température 16 peut être composé de résistances chauffantes d'une part et d'un circuit d'eau d'autre part. Des capteurs disposés dans le dispositif 10 permettent au régulateur de température 16 de relever la température et de la réguler vers le haut ou vers le bas, si besoin est. Par exemple, si une température seuil prédéterminée (comme la température de 60°C lors de l'opération **B**) risque d'être dépassée le régulateur 16 refroidit le système.

Il faut noter que, la combinaison entre introduction d'un agent compatibilisant ensemble avec le polymère, et le maintien à une température choisie au moyen du régulateur de température 16, permet *in fine* de générer un polymère uniforme ce qui favorise la dispersion de la matrice liante qui sera ajoutée dans une étape ultérieure. Cela résulte en une stabilité et une uniformité du produit final.

Il faut donc retenir que la micronisation du polymère au sein du dispositif 10 est contrôlée de par l'ajout en parallèle d'un agent compatibilisant d'une part et par la régulation de température d'autre part.

Après l'obtention de la préparation à polymère micronisé ayant des particules de polymère de diamètre inférieur ou égal à 500 µm par l'opération **B** de micronisation, il suit une opération **C** qui consiste à ajouter la matrice liante à ladite préparation à polymère micronisé. On forme ainsi un mélange à matrice liante. L'opération C est de préférence réalisée à une température de 180°C.

Cette opération **C** d'ajout de matrice liante est suivie d'une opération **D** qui consiste à ajouter la charge anti-adhérente au mélange à matrice liante. On forme ainsi un noyau. Il faut comprendre que le noyau est ici sous forme de composition pâteuse. Dans la suite du procédé, le noyau sera conditionné en produit pré-granulé comme décrit ci-après. L'opération **D** est de préférence réalisée à une température de 140°C.

Optionnellement, l'opération **D** peut comprendre une opération **D1** qui consiste à ajouter en outre 1% à 5% en poids d'un agent de réticulation.

Les opérations d'ajouts **C, D** et **D1,** sont réalisées de manière classique. Il s'agit d'un ajout de composantes chimiques dans l'extrudeuse 500. Chaque ajout peut se faire dans une section choisie (section d'entrée 100, section intermédiaire 200 ou section de sortie 300 de l'extrudeuse 500).

L'opération **E** suivante consiste à formuler ledit noyau (encore sous forme de composition pâteuse) en un produit pré-granulé. Il s'agit d'une granulation.

Au voisinage de la section de sortie 300, est disposée une filière 28 puis une chambre de granulation 26. Dans d'autres modes de réalisation, non représentés ici, la chambre de granulation 26 peut être disposée dans l'extrudeuse 500.

La filière 28 permet de transformer la composition sous forme de pâte en composition sous forme de fils ou de joncs.

La chambre de granulation 26 comprend un outil de cisaillement (ou outil de découpe) permettant de granuler la composition pâteuse (noyau) en des particules de masse et/ou taille choisie.

Pour contrôler l'opération **E** de granulation au sein du dispositif 10 de l'invention, celui-ci comprend un compresseur 18. Ce compresseur 18 est agencé pour agir sur chaque partie du dispositif 10 de l'invention. Le mode de réalisation de la figure 1 montre un lien direct entre régulateur de température 16 et l'extrudeuse 500. Toutefois, il faut comprendre que le compresseur 18 peut agir sur chaque partie du dispositif et tout particulièrement sur la filière 28 qui permet de transformer la composition bitumineuse en fils ou joncs réguliers à viscosités constantes.

Le compresseur 18 permet de contrôler activement l'avancement de la composition pâteuse tout au long de l'extrudeuse 500 et tout particulièrement dans la filière 28 puis la chambre de granulation 26. Selon un mode de réalisation préférentiel, la pression dans la filière est réglée à environ 5000 kPa et 6000 kPa. L'outil de cisaillement peut ainsi opérer de manière précise afin d'uniformiser la découpe de la composition pâteuse et fournir des particules ayant une masse pour environ cent particules comprise entre 0,4 g et 0,9 g. Les particules forment le produit pré-granulé.

En d'autres termes, l'opération **E** peut être vue comme une formulation par granulation contrôlée.

La chambre de granulation 26 comprend généralement une entrée d'eau de refroidissement afin de refroidir les particules fraîchement découpées. En conséquence, le produit pré-granulé doit être séché avant l'enrobage final. Le séchage est réalisé au moyen d'un outil de séchage 24 lequel comporte généralement une soufflerie à air thermo-régulée.

Ainsi, la figure 1 représente un outil de séchage 24 destiné à réaliser une opération **F** consistant à sécher le produit pré-granulé obtenu à l'opération **E.**

Après séchage, le procédé le l'invention comprend une opération **G** qui consiste à enrober le produit pré-granulé avec un agent anti-collant. À cet effet, le dispositif 10 de l'invention comporte une chambre d'enrobage 22.

Selon un mode de réalisation de l'invention, l'agent anti-collant est choisi parmi le groupe constitué de talc, de stéarate de zinc, de stéarate de calcium, de stéarate de magnésium et de poudre de polyéthylène.

Il faut noter que la charge anti-adhérente comprise dans le noyau et l'agent anti-collant qui enrobe ce noyau peuvent être de nature chimique proche voir identique. Toutefois, selon l'invention leur fonction finale est différente. Ainsi, la demanderesse à découvert non sans surprise que la combinaison de la charge anti-adhérente et de l'agent anti-collant affiche un effet de synergie qui résulte dans une forte stabilité du produit final.

En effet, après enrobage du produit pré-granulé avec l'agent anti-collant dans les conditions décrites dans la présente description, on obtient les granulés à composition de matrice liante selon l'invention. Les granulés à composition de matrice liante de l'invention présentent de bonnes caractéristiques physico-chimiques et affichent une grande stabilité de stockage dans le temps à des températures jusqu'à 60 °C.

Il faut comprendre que le régulateur de température 16 et le compresseur 18 sont agencés pour pouvoir agir sur l'ensemble du dispositif 10. Ainsi, l'invention offre un contrôle sensible de chaque opération. Selon l'invention, le régulateur de température coopère avec la section d'entrée 100 pour y maintenir une température inférieure ou égale à 60°C et coopère également avec la section intermédiaire 200 et la section terminale 300 pour y maintenir une température comprise entre 130°C et 200°C. Le compresseur 18 est réglé pour une mise sous pression de chaque section de l'extrudeuse 10 à une pression comprise entre 300 kPa et 7000 kPa. Une pression contrôlée est particulièrement garantie dans la filière avant la découpe de la composition pâteuse par l'outil de granulation afin de formuler ladite composition pâteuse en produit pré-granulé. Une pression contrôlée permet l'obtention de granulés de masse et de taille prédéterminées.

Le profil de l'outil de mélange 12, à savoir par exemple le profil de vis dans la section d'entrée 100, est choisi spécifiquement selon l'application. Ainsi, le profil de vis peut constituer l'outil de micronisation 14. Dans d'autres sections de l'extrudeuse, l'opérateur pourra adapter le profil de vis ou le combiner à d'autres éléments en fonction des besoins et selon l'usage dans l'art.

L'invention sera décrite ci-après à l'aide d'exemples de réalisation donnés à titre non limitatif.

### EXEMPLES DE RÉALISATION

Dans les exemples les pourcentages sont exprimés en pourcentages pondéraux.

La Demanderesse a préparé différentes variantes de granulés à composition de matrice liante selon l'invention. Chaque préparation a été réalisée dans un procédé conforme à l'invention et aux conditions décrites dans la description générale ci-avant.

Les tableaux 1 à 6 contiennent les compositions de noyaux selon l'invention. Les tableaux 4 à 6 présentent des modes de réalisation dans lesquels chaque noyau comprend un agent de réticulation, à savoir du *Rétiflex.*

**TABLEAU 1 : Composition 1 de noyau de granulés à composition de matrice liante.**

| **Produits** | **Teneurs pondérales** |
|---|---|
| Matrice Liante : Bitume 70/100 | 45% |
| Polymère : SBS | 40% |
| Agent compatibilisant | 5% |
| Charge anti-adhérente : talc | 10% |

**TABLEAU 2 : Composition 2 de noyau de granulés à composition de matrice liante.**

| **Produits** | **Teneurs pondérales** |
|---|---|
| Matrice Liante : 70/100 | 57% |
| Polymère : SBS | 35% |
| Agent compatibilisant | 5% |
| Charge anti-adhérente : Stéarate de Zinc | 3% |

**TABLEAU 3 : Composition 3 de noyau de granulés à composition de matrice liante.**

| **Produits** | **Teneurs pondérales** |
|---|---|
| Matrice Liante : Bitume 70/100 | 55% |
| Polymère : SBS | 30% |
| Agent compatibilisant | 5% |
| Charge anti-adhérente : Talc | 10% |

**TABLEAU 4 : Composition 4 de noyau de granulés à composition de matrice liante.**

| **Produits** | **Teneurs pondérales** |
|---|---|
| Matrice Liante : Bitume 70/100 | 50.4% |
| Polymère : SBS | 40% |
| Agent compatibilisant | 5% |
| Charge anti-adhérente : Stéarate de zinc | 3% |
| Agent de réticulation / vulcanisation | 1.6% |

**TABLEAU 5 : Composition 5 de noyau de granulés à composition de matrice liante.**

| **Produits** | **Teneurs pondérales** |
|---|---|
| Matrice Liante : Bitume 70/100 | 43.4% |
| Polymère : SBS | 40% |
| Agent compatibilisant | 5% |
| Charge anti-adhérente : Talc | 10% |
| Agent de réticulation / vulcanisation | 1.6% |

**TABLEAU 6 : Composition 6 de noyau de granulés à composition de matrice liante.**

| **Produits** | **Teneurs pondérales** |
|---|---|
| Matrice Liante : Bitume 70/100 | 42% |
| Polymère : SBS | 40% |
| Agent compatibilisant | 5% |
| Charge anti-adhérente : Talc | 10% |
| Agent de réticulation /vulcanisation | 3% |

Chaque composition de noyau a été enrobée par un agent anti-collant, dans les conditions décrites en relation avec l'opération **G.**

L'agent compatibilisant est un mélange de dérivés d'acides gras, à savoir la cire Licomont (marque déposée) BS 100.

Les exemples de composition utilisent un bitume 70/100 et un SBS étoilé commercialisé par la société VERSALIS sous la dénomination SOL T 6205 G.

L'agent de réticulation / vulcanisation est obtenu par la société Eiffage Travux Publics sous la dénomination *Rétiflex.*

### Exemple comparatif 1

Le tableau 7 montre un exemple comparatif entre du bitume 70/100 mélangé aux granulés de l'invention et du bitume 70/100 (noyau de composition 4 ; cf. tableau 4 ci-dessus) fabriqué de manière conventionnelle répondant aux spécifications requises. Le tableau 7 résume également les résultats de tests selon des normes choisies.

**TABLEAU 7 : Exemple comparatif 1**

| | **Bitume-polymère modifié avec granulés selon la composition 4** | **Bitume-polymère fabriqué en usine de manière conventionnelle (polymère poudre dispersé dans du bitume) conformément aux spécifications requises** |
|---|---|---|
| Bitume 70/100 | 90% | 95.4% |
| Granulés selon composition 4 (voir tableau 4) | 10% | - |
| Polymère : SBS | - | 4% |
| Agent de réticulation | - | 0.6% |
| Durée de fabrication pour obtenir la dispersion totale du polymère et sa réticulation | 1h30 | 2h00 |

| **Résultats** | | |
|---|---|---|
| Pénétrabilité a 25°C (1/10° mm) (Suivant NF EN 1427) | 59 | 40 à 70 |
| Température Bille et Anneau (°C) (Suivant NF EN 1426) | 82 | > 65 |
| Viscosité Brookfield Cylindre B 160°C (mPa.s) (Méthode non normalisée) | 358 | Environ 550 |
| Retour élastique (%) (suivant NF EN 13 398) | 98 | > 85 |
| Point de fragilité Fraass (°C) (suivant NF EN 12 593) | -12 | Environ -15 |
| Dosage en SBS par spectrométrie infrarouge (Méthode non normalisée) | 4.2 | 4 |
| Stockabilité 3jours à 180°C (Suivant NF EN13 399) | 100 | > 90 |

| **Traction à 0°C et 100 mm** (Suivant NF EN 13 589) | | |
|---|---|---|
| Seuil Allongement (%) | 9 | 8 |
| Contrainte (Mpa) | 3.3 | 2.7 |
| Rupture Allongement (%) | 739 | > 440 |
| Contrainte (Mpa) | 1.6 | 1.4 |
| Energie (J/cm2) | 25 | > 15 |

Le bitume modifié avec granulés selon la composition 4 répond aux spécifications requises.

### Exemple comparatif 2

Le tableau 8 montre un exemple comparatif entre un enrobé bitumineux obtenu à partir d'une composition bitume/polymère fabriquée de manière conventionnelle en laboratoire (mélange 1) et un enrobé bitumineux obtenu à partir d'une composition bitume/polymère comprenant des granulés obtenus à partir de la composition 1 (mélange 2) selon l'invention (noyau de composition 1 ; cf. tableau 1 ci-dessus). Le tableau 8 résume également les résultats de tests selon des normes choisies.

Le mélange 1 du tableau 8 a été obtenu par ajout dans les granulats et de filler (également appellé fines d'addition) préchauffés à 180°C d'une composition bitume/polymère à 5% de polymère SBS non réticulé, dispersée dans un bitume de type 70/100 (fabriqué de manière conventionnelle en laboratoire). La composition bitume/polymère a été portée à une température de 180°C avant son introduction dans les granulats.

Le mélange 2 a été obtenu par ajout de granulés selon la composition 1 (introduction à température ambiante) dans les granulats préchauffés à 180°C. Un bitume pur (bitume d'ajout) de type 70/100, préchauffé à 140°C, a ensuite été ajouté de manière à obtenir un enrobé bitumineux de teneurs en liant et en polymère identiques au mélange 1.

**TABLEAU 8 : Exemple comparatif 2**

| | **Mélange 1** | **Mélange 2** |
|---|---|---|
| Gravillons 10/14 | 18.63% | 18.63% |
| Gravillons 6/10 | 20.00% | 20.00% |
| Gravillons 2/6 | 18.00% | 18.00% |
| Sable 0/2 | 17.00% | 17.00% |
| Filler calcaire | 2.30% | 2.30% |
| Agrégats d'enrobés recyclés 0/10 | 20.00% | 20.00% |
| Bitume-polymère (fabrication conventionnelle en laboratoire) | 4.07% | - |
| Bitume 70/100 d'ajout | - | 3.41% |
| Granulés suivant composition 1 | - | 0.66% |
| | | |
| Teneur totale en bitume-polymère | 5.00% | 5.00% |
| Module de Richesse K | 3.29 | 3.28 |
| **Masse volumique maximale - Méthode volumétrique** (suivant NF EN 12 697-5) | | |
| Pmv (Mg/m³) | 2.501 | 2.498 |
| **Essai à la presse à cisaillement giratoire** (suivant NF EN 12 697-31) | | |
| V(%) à 10 girations | 16.0 | 14.3 |
| V(%) à 80 girations | 7.8 | 6.1 |
| V(%) à 200 girations | 4.8 | 3.3 |
| Pente de la droite | -3.686 | -3.611 |
| **Essai de sensibilité à l'eau** (suivant NF EN 12 697-12) | | |
| Teneur en vides (%) | 6.1 | 5.7 |
| C_{d} (KPa) | 10 600 | 10 700 |
| C_{w} (KPa) | 10100 | 9 800 |
| i/C | 95 | 92 |
| **Essai d'orniérage** (suivant EN 12 697-22+A1) | | |
| Teneur en vides (%) | 5.8% | 5.0% |
| Epaisseur des éprouvettes | 10.4 cm | 10.2 cm |
| Température de l'essai | 60.6°C | 60.0°C |
| Profondeur d'ornière à : | | |
| 1000 cycles | 1.6% | 1.9% |
| 3 000 cycles | 1.9% | 2.2% |
| 10 000 cycles | 2.1% | 2.5% |
| 30 000 cycles | 2.3% | 2.7% |
| **Module de rigidité en traction directe** (suivant NF EN 12 697-26) | | |
| Teneur en vides (%) | 5.6 | 5.2 |
| Module de rigidité 15°C et 0,02 s (MPa) | 9 900 | 10 700 |

L'enrobé fabriqué avec un bitume modifié au polymère SBS à partir de granulés selon la composition 1 répond aux spécifications requises.

### Exemple comparatif 3

Huit compositions de granulés contenant des taux variables de bitume, de polymère SBS, et de charges anti-adhérentes ont été évaluées en termes de stabilité au stockage. L'ensemble des granulés, hormis la composition dite de témoin 2, a été enrobé de talc après granulation et séchage, à hauteur de 5% en masse.

L'ensemble des compositions de granulés ont été conditionnées après fabrication, soit dans des sacs dits *big bags* usuels de grande taille (teneur d'environ 600 kg), soit dans des sacs usuels plastiques de petite taille (teneur de 10 kg) conditionnés en palette de 600 kg. La stabilité au stockage pendant 9 mois a été évaluée. Durant ces 9 mois, les températures ont varié de -10°C à +60°C.

Les résultats des observations effectuées au cours du stockage sont présentés dans le tableau 9.

**TABLEAU 9 : Stabilité de Stockage.**

| **Composition** | **Observations après 9 mois de stockage** |
|---|---|
| Témoin 1 (avec enrobage ) : | |
| - 40% SBS | Colmatage total et immédiat dès le début du conditionnement |
| - 0% charge anti-adhérente | |
| - 5% agent compatibilisant | |
| - 55% bitume 70/100 | |
| Témoin 2 (sans enrobage): | |
| - 40% SBS | Colmatage partiel des granulés 4 mois après conditionnement |
| - 10% Talc | |
| - 5% agent compatibilisant | |
| - 45% bitume 70/100 | |
| Composition stockA (avec enrobage): | |
| - 25% SBS | Colmatage total des granulés 2 semaines après fabrication. |
| - 10% CaCO₃ | |
| - 5% agent compatibilisant | |
| - 60% bitume 70/100 | |
| Composition stockB (avec enrobage) : | Colmatage total des granulés 1 mois après fabrication. |
| - 25% SBS | |
| - 5% CaCO₃ | |
| - 5% agent compatibilisant | |
| - 65% bitume 70/100 | |
| Composition stockC (avec enrobage) : | |
| - 35% SBS | |
| - 3% stéarate de zinc | |
| - 5% agent compatibilisant | |
| - 57% bitume 70/100 | |
| Composition stockD (avec enrobage) : | |
| - 30% SBS | |
| - 10% talc | |
| - 5% agent compatibilisant | |
| - 55% bitume 70/100 | Absence de colmatage dans les sacs. |
| Composition stockE (avec enrobage): | |
| - 40% SBS | |
| - 3% stéarate de zinc | |
| - 5% agent compatibilisant | |
| - 52% bitume 70/100 | |
| Composition stockF (avec enrobage): | |
| - 40% SBS | |
| - 10% Talc | |
| - 5% agent compatibilisant | |
| - 45% bitume 70/100 | |

On remarque que les compositions selon l'invention (taux de polymère d'au moins 30%, à savoir les compositions stockC, stockD, stockE et stockF) montrent une bonne stabilité au stockage.

L'invention permet la fabrication d'enrobés aux bitumes modifiés par des polymères SBS directement dans les malaxeurs des centrales d'enrobage. Les performances sont au moins identiques aux enrobés fabriqués à partir de bitumes/polymères SBS confectionnés habituellement dans les usines de liants. De plus, les produits fabriqués à partir de l'invention permettent une facilité de stockage (et ainsi une facilité de transport etc.). En conséquence, les coûts de stockage et de transport sont nettement inférieurs aux produits à bitumes/polymère de l'état de la technique (produits nécessitant un stockage à chaud sous forme liquide). Tout ceci conduit directement à une diminution des consommations d'énergie. La stabilité du produit permet en outre une exportation simple du produit.

La composition de l'invention peut ainsi servir de base pour la fabrication d'un mélange bitumineux comprenant des granulats naturels ou artificiels, de filler, et de matériaux recyclés.

## Revendications

1. Procédé de préparation de granulés à composition de matrice liante, comprenant les étapes suivantes :
a. prévoir 40% à 60% en poids d'une matrice liante, 30% à 40% en poids d'un polymère, 4% à 6% en poids d'un agent compatibilisant, et 3% à 15% en poids d'une charge anti-adhérente ;
b. microniser le polymère en présence de l'agent compatibilisant pour former une préparation à polymère micronisé ayant des particules de polymère de diamètre compris entre 250 µm à 1000 µm, de préférence entre 400 µm à 600 µm ;
c. ajouter la matrice liante à ladite préparation à polymère micronisé obtenue à l'étape b. pour former un mélange à matrice liante;
d. ajouter la charge anti-adhérente audit mélange à matrice liante obtenu à l'étape c. pour former un noyau ;
e. formuler le noyau obtenu à l'étape d. en un produit pré-granulé;
f. sécher le produit pré-granulé ;
g. enrober le produit pré-granulé avec un agent anti-collant ;
dans lequel l'étape b. est réalisée à une température inférieure ou égale à 60°C, les étapes c. et d. sont réalisées à une température comprise entre 130°C et 200°C

2. Procédé selon la revendication 1, dans lequel l'étape e. comporte une mise sous pression comprise entre 2000 kPa et 7000 kPa.

3. Procédé selon l'une des revendications précédentes, dans lequel le polymère est un copolymère styrène-butadiène-styrène (SBS).

4. Procédé selon l'une des revendications précédentes, dans lequel l'étape d. comprend en outre l'ajout de 1% à 5% en poids d'un agent de réticulation.

5. Procédé selon l'une des revendications précédentes, dans lequel l'agent compatibilisant est choisi parmi le groupe constitué d'une cire à base d'un mélange de dérivés d'acides gras, d'une cire paraffinique, d'une cire d'origine végétale, d'une cire d'origine animale, ou d'un mélange de ceux-ci.

6. Procédé selon l'une des revendications précédentes, dans lequel la matrice liante est choisie parmi le groupe constitué de bitume de classe 35/50, de bitume de classe 50/70, de bitume de classe 70/100, de bitume de classe 160/220, de poix de tall-oil ou de ses dérivés, d'un mélange d'acides gras ou de ses dérivés, d'une huile d'origine végétale, d'une huile d'origine animale, d'un dérivé de colophane, d'un ester méthylique d'huile végétale ou d'un mélange de ceux-ci.

7. Procédé selon l'une des revendications précédentes, dans lequel la charge anti-adhérente est choisie parmi le groupe constitué de talc, de stéarate de zinc, de stéarate de calcium, de stéarate de magnésium, de poudre polyéthylène, de cire de polyéthylène, de silice broyée, de noir de carbone, ou d'un mélange de ceux-ci.

8. Procédé selon l'une des revendications précédentes, dans lequel l'étape e. comprend la découpe par cisaillement dudit noyau de manière à obtenir un produit pré-granulé formé par des particules, lesdites particules ayant une masse pour environ cent particules comprise entre 0,6 g à 0,8 g.

9. Procédé selon l'une des revendications précédentes, **caractérisé en ce que** le polymère fourni à l'étape a. est sous forme de grains de taille comprise entre 1 mm et 10 mm.

10. Composition de matrice liante sous forme de granulés, chaque granule comportant un noyau et un enrobage et présentant une masse pour environ cent particules comprise entre 0,5 g à 2 g, le noyau comprenant :
- 40% à 60% en poids d'une matrice liante;
- 30% à 40% en poids d'un polymère ;
- 4% à 6% en poids d'un agent compatibilisant ; et
- 2% à 15% en poids d'une charge anti-adhérente ;
et l'enrobage comprenant un agent anti-collant.

11. Composition selon la revendication 10, dans laquelle le noyau comprend en outre 1% à 5% en poids d'un agent de réticulation.

12. Utilisation de la composition selon l'une des revendications 10 et 11 dans une centrale d'enrobage.

13. Utilisation de la composition selon la revendication 11 dans une usine de liants.

## Patentansprüche

1. Verfahren zur Herstellung von Granulaten mit einer Bindemittelmatrix-Zusammensetzung, umfassend die folgenden Schritte:
a. Vorsehen von 40 bis 60 Gew.-% einer Bindemittelmatrix, 30 bis 40 Gew.-% eines Polymers, 4 bis 6 Gew.-% eines Kompatibilisierungsmittels und 3 bis 15 Gew.-% eines Antihaft-Füllstoffes;
b. Mikronisieren des Polymers im Beisein des Kompatibilisierungsmittels, um ein Präparat mit mikronisiertem Polymer mit Polymerpartikeln mit einem Durchmesser zwischen 250 µm bis 1000 µm, vorzugsweise zwischen 400 µm bis 600 µm, zu bilden;
c. Hinzufügen der Bindemittelmatrix zu dem Präparat mit mikronisiertem Polymer, das in Schritt b. erhalten wurde, um ein Gemisch mit Bindemittelmatrix zu bilden;
d. Hinzufügen des Antihaft-Füllstoffes zu dem Gemisch mit Bindemittelmatrix, das in Schritt c. erhalten wurde, um einen Kern zu bilden;
e. Formulieren des in Schritt d. erhaltenen Kerns zu einem Vorgranulatprodukt;
f. Trocknen des Vorgranulatproduktes;
g. Umhüllen des Vorgranulatproduktes mit einem das Kleben verhindernden Wirkstoff;
bei dem der Schritt b. bei einer Temperatur kleiner oder gleich 60°C, die Schritte c. und d. bei einer Temperatur zwischen 130°C und 200°C durchgeführt werden.

2. Verfahren nach Anspruch 1, bei dem der Schritt e. eine Unterdrucksetzung zwischen 2000 kPa und 7000 kPa umfasst.

3. Verfahren nach einem der vorhergehenden Ansprüche, bei dem das Polymer ein Styrol-Butadien-Styrol-Copolymer (SBS) ist.

4. Verfahren nach einem der vorhergehenden Ansprüche, bei dem der Schritt d. ferner die Hinzufügung von 1 bis 5 Gew.-% eines Vernetzungsmittels umfasst.

5. Verfahren nach einem der vorhergehenden Ansprüche, bei dem das Kompatibilisierungsmittel in der Gruppe ausgewählt ist, die von einem Wachs auf Basis eines Gemisches von Fettsäurederivaten, Paraffinwachs, Wachs pflanzlichen Ursprungs, Wachs tierischen Ursprungs oder einem Gemisch derselben gebildet ist.

6. Verfahren nach einem der vorhergehenden Ansprüche, bei dem die Bindemittelmatrix in der Gruppe ausgewählt ist, die von Bitumen der Klasse 35/50, Bitumen der Klasse 50/70, Bitumen der Klasse 70/100, Bitumen der Klasse 160/220, Tallölpech oder seinen Derivaten, einem Gemisch von Fettsäuren oder seinen Derivaten, einem Öl pflanzlichen Ursprungs, einem Öl tierischen Ursprungs, einem Kolophoniumderivat, einem Methylester pflanzlichen Ursprungs oder einem Gemisch derselben gebildet ist.

7. Verfahren nach einem der vorhergehenden Ansprüche, bei dem der Antihaft-Füllstoff in der Gruppe ausgewählt ist, die von Talk, Zinkstearat, Kalziumstearat, Magnesiumstearat, Polyethylenpulver, Polyethylenwachs, zerkleinertem Siliziumoxid, Rußschwarz oder einem Gemisch derselben gebildet ist.

8. Verfahren nach einem der vorhergehenden Ansprüche, bei dem der Schritt e. das Ausschneiden des Kerns durch Abscheren umfasst, um ein Vorgranulatprodukt zu erhalten, das von Partikeln gebildet ist, wobei die Partikel eine Masse auf ungefähr hundert Partikel zwischen 0,6 g und 0,8 g haben.

9. Verfahren nach einem der vorhergehenden Ansprüche, **dadurch gekennzeichnet, dass** das Polymer, das in Schritt a. bereitgestellt wird, in Form von Körnern mit einer Größe zwischen 1 mm und 10 mm vorhanden ist.

10. Bindemittelmatrix-Zusammensetzung in Form von Granulaten, wobei jedes Granulat einen Kern und eine Hülle umfasst und eine Masse auf ungefähr hundert Partikel zwischen 0,5 g und 2 g aufweist, wobei der Kern umfasst:
- 40 bis. 60 Gew.-% einer Bindemittelmatrix;
- 30 bis 40 Gew.-% eines Polymers;
- 4 bis 6 Gew.-% eines Kompatibilisierungsmittels; und
- 2 bis 15 Gew.-% eines Antihaft-Füllstoffes;
und wobei die Hülle einen das Kleben verhindernden Wirkstoff umfasst.

11. Zusammensetzung nach Anspruch 10, bei der der Kern ferner 1 bis 5 Gew.-% eines Vernetzungsmittels umfasst.

12. Verwendung der Zusammensetzung nach einem der Ansprüche 10 und 11 in einer Mischanlage.

13. Verwendung der Zusammensetzung nach Anspruch 11 in einem Bindemittelwerk.

## Claims

1. Method for preparing granules comprising a binder matrix composition, comprising the following steps:
a. providing from 40 wt.% to 60 wt.% of a binder matrix, from 30 wt.% to 40 wt.% of a polymer, from 4 wt.% to 6 wt.% of a compatibilizing agent, and from 3 wt.% to 15 wt.% of an anti-adhesive filler;
b. micronizing the polymer in the presence of the compatibilizing agent to form a preparation comprising micronized polymer having polymer particles with a diameter of from 250 µm to 1000 µm, preferably from 400 µm to 600 µm;
c. adding the binder matrix to said preparation comprising micronized polymer obtained in step b. to form a mixture comprising binder matrix;
d. adding the anti-adhesive filler to said mixture comprising binder matrix obtained in step c. to form a core;
e. formulating the core obtained in step d. to a pre-granulated product;
f. drying the pre-granulated product;
g. coating the pre-granulated product with an anti-sticking agent;
wherein step b. is carried out at a temperature of less than or equal to 60°C, and steps c. and d. are carried out at a temperature of from 130°C to 200°C.

2. Method according to claim 1, wherein step e. includes pressurization of from 2000 kPa to 7000 kPa.

3. Method according to any one of the preceding claims, wherein the polymer is a styrene-butadiene-styrene (SBS) copolymer.

4. Method according to any one of the preceding claims, wherein step d. further includes the addition of from 1 wt.% to 5 wt.% of a crosslinking agent.

5. Method according to any one of the preceding claims, wherein the compatibilizing agent is chosen from the group composed of a wax based on a mixture of fatty acid derivatives, a paraffin wax, a wax of vegetable origin, a wax of animal origin, or a mixture thereof.

6. Method according to any one of the preceding claims, wherein the binder matrix is chosen from the group composed of bitumen of grade 35/50, bitumen of grade 50/70, bitumen of grade 70/100, bitumen of grade 160/220, tall-oil pitch or derivatives thereof, a mixture of fatty acids or derivatives thereof, an oil of vegetable origin, an oil of animal origin, a colophony derivative, a methyl ester of a vegetable oil, or a mixture thereof.

7. Method according to any one of the preceding claims, wherein the anti-adhesive filler is chosen from the group composed of talc, zinc stearate, calcium stearate, magnesium stearate, polyethylene powder, polyethylene wax, ground silica, carbon black, or a mixture thereof.

8. Method according to any one of the preceding claims, wherein step e. includes shearing of said core in order to obtain a pre-granulated product formed by particles, said particles having a mass for approximately one hundred particles of from 0.6 g to 0.8 g.

9. Method according to any one of the preceding claims, **characterised in that** the polymer provided in step a. is in the form of grains having a size of from 1 mm to 10 mm.

10. Binder matrix composition in the form of granules, each granule comprising a core and a coating and having a mass for approximately one hundred particles of from 0.5 g to 2 g, the core comprising:
- from 40 wt.% to 60 wt.% of a binder matrix;
- from 30 wt.% to 40 wt.% of a polymer;
- from 4 wt.% to 6 wt.% of a compatibilizing agent; and
- from 2 wt.% to 15 wt.% of an anti-adhesive filler;
and the coating comprising an anti-sticking agent.

11. Composition according to claim 10, wherein the core further comprises from 1% to 5% of a crosslinking agent.

12. Use of the composition according to either claim 10 or claim 11 in a coating unit.

13. Use of the composition according to claim 11 in a binder plant.
